Europäisches Patentamt

European Patent Office

Office européen des brevets

(19)

(11) **EP 0 552 699 B1**

(12) **EUROPÄISCHE PATENTSCHRIFT**

(45) Veröffentlichungstag und Bekanntmachung des Hinweises auf die Patenterteilung:
06.08.1997 Patentblatt 1997/32

(51) Int Cl.⁶: **H04L 25/03**, H04L 1/20

(21) Anmeldenummer: **93100671.2**

(22) Anmeldetag: **18.01.1993**

(54) **Schätzung der Kanalimpulsantwort**

Estimation of channel impulse response

Estimation de la réponse impulsionelle de canal

(84) Benannte Vertragsstaaten:
**DE ES FR IT**

(30) Priorität: **24.01.1992 DE 4201810**

(43) Veröffentlichungstag der Anmeldung:
**28.07.1993 Patentblatt 1993/30**

(73) Patentinhaber: **AEG MOBILE COMMUNICATION GmbH**
**D-89081 Ulm (DE)**

(72) Erfinder:
• **Langewellpott, Ulrich, Dr.**
  **verstorben (DE)**
• **Bossert, Martin, Dr.**
  **W-7906 Bermaringen (DE)**
• **Rainer, Michael**
  **W-7900 Ulm/Donau (DE)**

(74) Vertreter: **Körner, Ekkehard, Dipl.-Ing.**
**Patentanwalt**
**Maximilianstrasse 58**
**80538 München (DE)**

(56) Entgegenhaltungen:
**WO-A-91/17607        DE-A- 4 135 495**

• **IEE PROCEEDINGS F. COMMUNICATIONS, RADAR & SIGNAL PROCESSING Bd. 138, Nr. 4, August 1991, Stevenage, GB, SS 388-396, XP258637; S. MCLAUGHLIN: 'Adaptive equalisation via Kalman filtering techniques.'**
• **IEEE International Conference on Communications ICC '91, Denver, US, 23-26/06/91, vol. 1, pp. 23-27, IEEE, New York, US; XP269374; P. NEWSON/B. MULGREW: 'Adaptive Channel Identification and Equalisation for GSM European Digital Mobile Radio'**

**Beschreibung**

Die Erfindung betrifft ein digitales Nachrichtenübertragungsverfahren der im Oberbegriff des Patentanspruchs 1 angegebenen Art.

Ein solches Verfahren ist z.B. aus der WO-A-91 17607 bekannt.

Bei digitalen Nachrichtenübertragungsverfahren werden die Nachrichten als Folge von reellen oder komplexen Symbolwerten codiert. Die auftretenden Werte können sowohl reel als auch komplexartig sein. Für die üblichen digitalen linearen Modulationsverfahren (z.B. Phase Shift Keying, PSK, Minimum Shift Keying MSK, etc.) und einen linearen Übertragungskanal kann das Empfangssignal y(t) bekannterweise durch Faltung einer Kanalimpulsantwort $p(t,\tau)$ mit der gesendeten Symbolfolge $a_s$ beschrieben werden als

$$\underline{y}(t) = \int_{-\infty}^{\infty} \underline{p}(\tau) \sum_{s} \underline{a}_s \delta(t - \tau - sT)\mathrm{d}\tau$$

wobei $\delta$ das Dirac-Funktionssymbol und T die Symboldauer ist.

Die Kanalimpulsantwort gibt sowohl die Eigenschaften der Modulation wie des Funkkanals wieder (Mehrwegeausbreitung). Sie beschreibt die Antwort der Übertragungsstrecke zum Zeitpunkt t auf dem Dirac-Stoß als Eingangssignal in Abhängigkeit der Verzögerung $\tau$. Es wird angenommen, daß das Empfangssignal bandbegrenzt ist und daher abgetastet werden kann. Die Abtastrate $f_a$ soll n mal die Symbolrate betragen. Das abgetastete Empfangssignal kann dann durch die diskrete Faltung der Symbole mit der abgetasteten Kanalimpulsantwort beschrieben werden:

$$\underline{Y}_{ni+k} = \sum_{l} \underline{a}_{(i-l)} \underline{p}_{nl+k} \qquad k = 0, \cdots, n-1$$

$\underline{Y}_{ni+k}$ sind die empfangenen komplexen Abtastwerte, $\underline{p}_{t,nl+k}$ ist die Kanalimpulsantwort zur Zeit t in Abhängigkeit der Verzögerung $\tau = (nl+k)/f_a$ und die $\underline{a}_i$ sind die gesendeten komplexen (z.B. 4 oder 8 PSK) oder reellen Symbole (z.B. 2 PSK oder MSK).

Bei bekannter Kanalimpulsantwort $\underline{p}$ kann die gesendete Symbolfolge aus dem Empfangssignal, z.B. mit Hilfe eines Kanal-Matched-Filters rekonstruiert werden. Die Kanalimpulsantwort ist a priori unbekannt, kann aber unter bestimmten Voraussetzungen aus den Empfangssignalen ermittelt werden. Bekannt hierfür ist insbesondere, neben den die zu übertragende Information enthaltenden Nachrichtensymbolen noch eine Trainingssequenz mit empfängerseitig vorbekannter Symbolfolge zu übertragen. Diese Trainingssequenz kann empfängerseitig erkannt und zur Bestimmung der Kanalimpulsantwort herangezogen werden. Handelt es sich bei der Trainingssequenz um eine Symbolfolge mit idealer Autokorrelationsfunktion, so kann die Impulsantwort des Übertragungskanals unmittelbar als Kreuzkorrelationsfunktion der Symbolfolge mit den Abtastwerten der Trainingssequenz gewonnen werden. Bei nicht idealer Autokorrelationsfunktion stellt die Kreuzkorrelationsfunktion nur eine Annäherung an die tatsächliche Kanalimpulsantwort dar, deren Abweichung von den Korrelationseigenschaften der Symbolfolge des betrachteten Signalabschnitts abhängt.

Zum einen ist die Einschränkung auf Trainingssequenzen mit idealer Autokorrelationsfunktion ungünstig, zum anderen aber ist insbesondere bei zeitveränderlicher Impulsantwort die Ermittlung aktueller Impulsantworten vor und/oder nach der Trainingssequenz wünschenswert.

Eine erste Möglichkeit, diese Probleme zu lösen, ist im Artikel "Adaptive Channel Identification for GSM European Digital Mobile Radio" ("IEEE International Conference on Communications ICC'91", Juni 1991, Denver US; Band 1, Nr. 5, Seiten 23-27) von NEWSON et al. offenbart.

Der Erfindung liegt daher die Aufgabe zugrunde, ein digitales Nachrichtenübertragungsverfahren anzugeben, welches eine gute Schätzung der Kanalimpulsantwort anhand von beliebigen Symbolfolgen ermöglicht.

Die Erfindung ist im Patentanspruch 1 beschrieben. Die Unteransprüche enthalten vorteilhafte Ausgestaltungen und Weiterbildungen der Erfindung.

Die Erfindung ist besonders vorteilhaft zur Ermittlung von aktuellen Werten einer zeitveränderlichen Impulsantwort anhand von empfängerseitig aus den Empfangssignalen rekonstruierten Nachrichtensymbolen, deren Korrelationseigenschaften zufällig durch die übertragenen Informationsbits gegeben ist. Vorzugsweise enthalten die übertragenen Daten neben den Informationsbits noch eine Trainingssequenz mit empfängerseitig vorbekannter Symbolfolge, z.B. eine Pseudo-Noise-Folge mit guten Korrelationseigenschaften, anhand derer eine erste gute Schätzung der Kanalimpulsantwort vorgenommen wird. Mit Hilfe dieser durch die erste Schätzung gewonnenen Impulsantwort werden in der Umgebung der Trainingssequenz Informationsbits decodiert und zur Bildung neuer Signalabschnitte zur Ermittlung von Kanalimpulsantworten für außerhalb der Trainingssequenz liegende Zeitpunkte herangezogen. Die Symbolfolgen dieser neuen Signalabschnitte zeigen nichtideale, zufällige Korrelationseigenschaften, deren unverfälschender Einfluß auf die ermittelte Impulsantwort bei der Erfindung weitgehend beseitigt ist. Insbesondere ist die Erfindung auch vorteilhaft anwendbar auf die Nachführung der Impulsantwort mit sehr kurzen neuen Signalabschnitten, z.B. auch nur ein neues Informationsbit.

Die Erfindung ist nachfolgend anhand von Beispielen noch eingehend erläutert. Zugrunde gelegt wird dabei ein digitales Nachrichtenübertragungssystem der bereits eingangs beschriebenen Art, bei welchem ein durch die Faltung einer Kanalimpulsantwort $\underline{p}(\tau)$ mit den gesendeten Symbolen $\underline{a}$ beschriebenes Empfangssignal $\underline{y}(t)$ n-fach übergetastet wird und die Abtastzeitpunkte bzw. Verzögerungsstützstellen als ganzzahlige Vielfache des Abtastintervalls angegeben sind. Dabei kann die Abtastung im Symboltakt als Sonderfall $n = 1$ der allgemeineren Beschreibung mit Überabtastung betrachtet werden.

Die Kanalimpulsantwort kann bei einem solchen System durch Kreuzkorrelation eines abgetasteten Empfangssignalabschnitts mit der in diesem Signalabschnitt vorliegenden Symbolfolge als Korrelationsfolge ermittelt werden. Die Kreuzkorrelationsfunktion $\underline{q}(\tau)$ kann dargestellt werden als

$$\underline{q}_{nl+k} = \sum_{i=\alpha}^{\beta} \underline{a}_i^* \underline{y}_{n(l+i)+k} \qquad \text{für} \quad l = 0, \cdots, m-1$$

wobei $\alpha$, $\beta$ die Grenzen der Korrelationsfolge und des entsprechenden Signalabschnitts bezeichnen. Die Länge der Korrelationsfolge wird auch als Korrelationslänge bezeichnet. Die Länge der Impulsantwort ist in der Schreibweise der vorstehenden Gleichung mit m Symboldauern angenommen. Der Kreuzkorrelationsfunktion $\underline{q}(\tau)$ stellt nur eine recht grobe Näherung für die gesuchte Impulsantwort dar. Wegen der zufälligen Korrelationseigenschaften können die Abweichungen erheblich sein. Die Impulsantwort kann aber aus der Kreuzkorrelationsfunktion in guter Näherung gewonnen werden, wenn die Einzelwerte der Kreuzkorrelationsfunktion durch Korrekturglieder $\underline{U}$, welche die Nebenwerte der korrelationsfunktion akf der Korrelationsfolge enthalten berichtigt werden nach

$$\underline{p}_{nl+k} = \frac{1}{\text{akf}_0} \, \underline{q}_{nl+k} - U(\text{akf}_{\neq 0})$$

Bei Normierung der Korrelationsfolge in der Weise, daß für den Hauptwert der Autokorrelationsfunktion $\text{akf}_o = 1$ gilt, stellt die Kreuzkorrelationsfunktion direkt die grobe Näherung für die Kanalimpulsantwort dar.

Zur Erläuterung vorteilhafter Ausführungen im einzelnen wird die bereits angegebene Beziehung für die Kreuzkorrelationsfunktion wie nachfolgend umgeformt.

$$\underline{q}_{nl+k} = \sum_{i=\alpha}^{\beta} \underline{a}_i^* \sum_{j} \underline{a}_{l+i-j} \underline{p}_{nj+k}$$

$$= \sum_{j} \underline{p}_{nj+k} \sum_{i=\alpha}^{\beta} \underline{a}_i^* \underline{a}_{l+i-j}$$

$$= \sum_{j} \underline{p}_{nj+k} \, \text{akf}_{l-j}$$

mit $j = 0,1,...,m-1$ und der Autokorrelationsfunktion

$$\text{akf}_r = \sum_{i=\alpha}^{\beta} \underline{a}_i^* \underline{a}_{r+i}$$

wobei die Nachbarbits des betrachteten Signalabschnitts innerhalb der Impulsantwortlänge mitberücksichtigt sind.

Die vorstehenden Beziehungen beschreiben auch den hier nicht zugrunde gelegten Fall einer idealen Autokorrelationsfunktion, wo wegen $\text{akf}_r = 0$ für $r \neq 0$ nur jeweils ein Summenglied bleibt.

Die oben abgeleitete Beziehung

$$\underline{q}_{nl+k} = \sum_j \underline{p}_{nj+k} \text{akf}_{l-j}$$

kann als ein lineares Gleichungssystem mit n.m gesuchten Variablen $\underline{p}_{nl+k}$ und entsprechend vielen Gleichungen betrachtet werden, bei welchem die $\underline{q}_{nl+k}$ für alle l und k entsprechend der Länge der der Kanalimpulsantwort durch Korrelation bestimmt werden und die Koeffizienten der Variablen durch die ebenfalls bekannte Autokorrelationsfunktion gegeben sind. Durch Lösung des Gleichungssystems läßt sich die gesuchte Kanalimpulsantwort auch bei beliebiger Autokorrelationsfunktion der Korrelationsfolge, d.h. der Symbolfolge des betrachteten Signalabschnitts, bestimmen.

Das Gleichungssystem kann umgeformt werden zu

$$\underline{p}_{nl+k} = 1/\text{akf}_0 \left( \underline{q}_{nl+k} - \sum_{j \neq l} \underline{p}_{nj+k} \text{akf}_{l-j} \right)$$

Werden in dem Summenterm als Näherungswerte die $\underline{q}_{nl+k}$ anstelle der $\underline{p}_{nl+k}$ eingesetzt, so ergibt sich eine erste Schätzung der Kanalimpulsantwort aus der Kreuzkorrelationsfunktion und aus den die Nebenwerte der Autokorrelationsfunktion enthaltenden Korrekturgliedern. Die Schätzung der Kanalimpulsantwort kann verbessert werden durch eine iterative Lösung des Gleichungssystems, wenn in einem ersten Schritt wie beschrieben die Werte der Kreuzkorrelationsfunktion als Startwerte in die Summenglieder eingesetzt werden und in den folgenden Iterationsschritten jeweils die im letzten Schritt geschätzten Werte ($\underline{p}'_{nl+k}$) der Impulsantwort in die Summenglieder eingesetzt und so wieder neue verbesserte Werte $\underline{p}_{nl+k}$ ermittelt werden. Die Iterationen können nach einer vorgebbaren maximalen Schrittzahl oder nach Erreichen einer vorgebbaren Genauigkeit für die Impulsantwort abgebrochen werden.

Bei zeitvarianten Kanälen kann die Kanalimpulsantwort auch nachgeführt werden. Mit Hilfe einer Trainingssequenz kann zum Beispiel die Kanalimpulsantwort einmal durch Korrelation gemessen werden. Nach der Demodulation eines oder mehrerer Bits wird dann die Schätzung der Kanalimpulsantwort nachgeführt. Im Prinzip läßt sich die Nachführung immer durch eine erneute Schätzung der Kanalimpulsantwort (Berechnung von $q_{nl+k}$ durch Korrelation des Empfangssignals mit der geschätzten Bitfolge) beschreiben. Die relationslänge kann dann mehrere Abtastwerte oder auch nur einen Abtastwert betragen. Um eine Nachführung der Kanalimpulsantwort zu ermöglichen, wird ein neuer Wert für die Kanalimpulsantwort $\Delta \underline{P}_{nl+k}$ im einfachsten Fall gewichtet mit dem alten Wert $\underline{P}_{nl+k}$ gemittelt um einen neuen Wert $\underline{P}_{nl+k}$ zu erhalten. Die Nachführung kann aber auch z.B. mit einem Kalmanfilter durchgeführt werden. $\Delta \underline{P}_{nl+k}$ muß aus dem Korrelationsergebnis $q_{nl+k}$ bestimmt werden. Die tionseigenschaften der Referenz sind aber nun in jedem Fall zufällig von den gesendeten Informationsbits abhängig. Bei Korrelation über mehrere Abtastwerte können die beschriebene Ausführungen vorteilhaft angewandt werden um $\Delta \underline{P}_{nl+k}$ zu ermitteln (Lösen eines Gleichungssystems). Ist die Korrelationslänge dagegen nur kurz, so ist u.U. die neue Schätzung der Kanalimpulsantwort sehr ungenau. Dies ist insbesondere der Fall wenn nur ein Abtastwert des Empfangssignals bei jedem Schritt der Nachführung berücksichtigt wird.

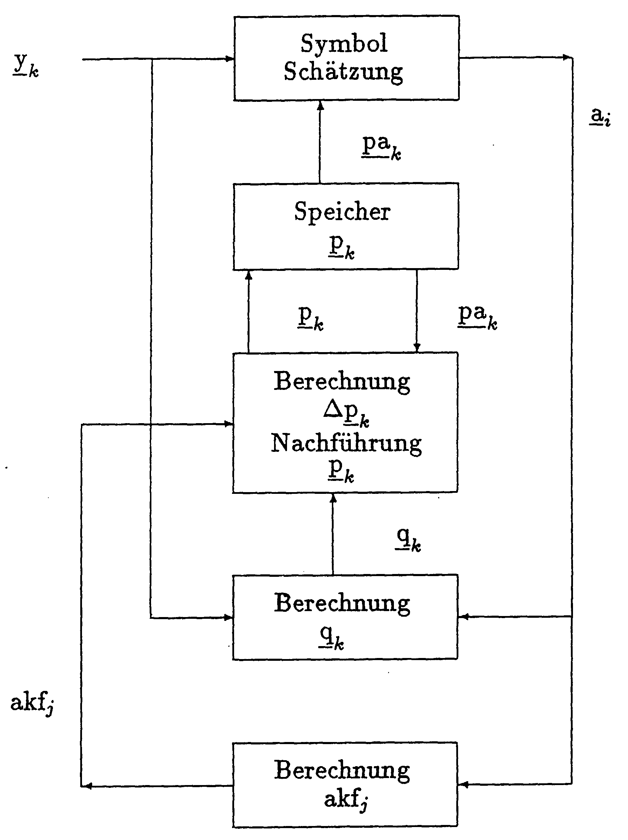

Ein für solche Fälle bevorzugte Ausführung der Erfindung ist unter Bezugnahme auf die Abbildung veranschaulicht.

Aus dem abgetasteten Empfangssignal $\underline{y}_k$ werden mit Hilfe einer zuvor ermittelten Kanalimpulsantwort $\underline{Pa}_k$ eines oder wenige Symbole $\underline{a}_i$ neu geschätzt. Daraus wird eine neue tokorrelationsfunktion $\text{akf}_j$ eines neuen Signalabschnitts (unter Einbeziehung von Nachbarbits) berechnet. Durch Kreuzkorrelation des neuen Signalabschnitts des Empfangssignals $\underline{y}_k$ mit der für diesen Abschnitt decodierten kurzen Symbolfolge bzw. im Extremfall des einen Symbols wird eine neue Kreuzkorrelationsfunktion $\underline{q}_k$ gebildet, aus der in bereits beschriebener Weise ein Aktualisierungswert

$$\Delta \underline{p}_{nl+k} = 1/\mathrm{akf}_0(\underline{q}_{nl+k} - \sum_{j \neq l} \underline{\mathrm{pa}}_{nj+k}\,\mathrm{akf}_{l-j})$$

bestimmt und zur Nachführung der Impulsantwort z.B. mittels gewichteter Mittelung oder Kalmanfilterung zusammen mit zuvor bestimmten und gespeicherten Werten der Kanalimpulsantwort $\underline{Pa}_k$ zu einer neuen Impulsantwort $\underline{P}_k$ verknüpft wird, die ihrerseits wieder abgespeichert und zur Schätzung eines oder weniger weiterer Symbole verwandt wird.

**Patentansprüche**

1.  Digitales Nachrichtenübertragungsverfahren, bei welchem empfängerseitig die empfangenen Signale abgetastet und durch Kreuzkorrelation eines Signalabschnitts mit einer Korrelationsfolge eine Schätzung der Impulsantwort des Übertragungskanals vorgenommen wird, dadurch gekennzeichnet daß:

    a) die Korrelationsfolge die Folge der digitalen Nachrichtensymbole $a_i$ des betrachteten Signalabschnitts ist;

    b) die Autokorrelationsfunktion $\mathrm{akf}_r = \Sigma\, a_i^*\,.a_{r+i}$ der Korrelationsfolge unter Einschluß von innerhalb der Impulsantwortlänge benachbarten Nachrichtensymbolen gebildet, wird mit $|r| = 0,1,...,m-1$ und m als Länge der Impulsantwort in Vielfachen einer Symboldauer; und

    c) die Einzelwerte der Impulsantwort an diskreten Stützstellen der Verzögerungsvariablen jeweils gebildet sind durch den für die Kreuzkorrelationsfunktion beim selben Verzögerungswert vorliegenden Funktionswert und einen die Nebenwerte der Autokorrelationsfunktion enthaltenden Korrekturwert.

2.  Verfahren nach Anspruch 1, dadurch gekennzeichnet, daß das Empfangssignal mit einer Abtastrate $f_a$, die das n-fache der Symbolrate beträgt, abgetastet wird, und daß die Impulsantwort $\underline{P}(\tau)$ aus der Kreuzkorrelationsfunktion $\underline{q}(\tau)$ und der Autokorrelationsfunktion akf nach der Beziehung

$$\underline{q}_{nl+k} = \sum \underline{p}_{nj+k}\,\mathrm{akf}_{l-j}$$

    in Abhängigkeit von der Verzögerung $\tau = (nl+k)/fa$ mit $k = 0,1,...n-1$ und $l,j = 0,1,....,m-1$ ermittelt wird.

3.  Verfahren nach Anspruch 1 oder 2, dadurch gekennzeichnet, daß die Impulsantwort gemäß

$$\underline{P}_{nl+k} = 1/\mathrm{akf}_0(\underline{q}_{nl+k} - \sum_{j \neq l} \underline{p}_{nj+k}\,\mathrm{akf}_{l-j})$$

    geschätzt wird.

4.  Verfahren nach Anspruch 3, dadurch gekennzeichnet, daß die Schätzung der Impulsantwort durch Iteration gemäß

$$\underline{P}_{nl+k} = 1/\mathrm{akf}_0(\underline{q}_{nl+k} - \sum_{j \neq l} \underline{p}'_{nj+k}\,\mathrm{akf}_{l-j})$$

    schrittweise verbessert wird, wobei mit $\underline{p}'_{nj+k}$ jeweils die im vorangegangenen Iterationsschritt geschätzten Werte der Impulsantwort bezeichnet sind.

5.  Verfahren nach Anspruch 2, dadurch gekennzeichnet, daß die Impulsantwort gemäß

$$\Delta \underline{p}_{nl+k} = 1/\mathrm{akf}_0(\underline{q}_{nl+k} - \sum_{j \neq l} \underline{pa}_{nj+k} \mathrm{akf}_{l-j})$$

geschätzt wird mit $\underline{pa}_{nj+k}$ als in einem vorangegangenen Korrelationsschritt bestimmter Impulsantwort.

**6.** Verfahren nach einem der vorhergehenden Ansprüche, dadurch gekennzeichnet, daß die Impulsantwort nachgeführt wird in der Weise, daß ausgehend von einer zuvor bestimmten Impulsantwort mit bis dahin nicht zur Bestimmung der Impulsantwort herangezogenen Nachrichtensymbolen gebildet, für diesen neuen Signalabschnitt eine Impulsantwort geschätzt und eine neue Impulsantwort durch gewichtete Mittelwertbildung oder Kalman-Filterung aus der zuvor bestimmten und der neu geschätzten Impulsantwort gebildet wird.

**7.** Verfahren nach Anspruch 5 oder Anspruch 6, dadurch gekennzeichnet, daß der neue Signalabschnitt nur eine Symbollänge umfaßt und der Symbolwert auf der Grundlage der zuvor bestimmten Impulsantwort durch Harddecision gewonnen ist.

**8.** Verfahren nach einem der vorhergehenden Ansprüche, dadurch gekennzeichnet, daß die Nachrichten blockweise in Zeitschlitzen übertragen werden und jeder Zeitschlitz eine Trainingssequenz, vorzugsweise eine Pseudo-Noise-Folge enthält und daß im Empfänger in einem ersten Schritt eine Impulsantwort mit Hilfe der Trainingssequenz bestimmt und damit Nachrichtensymbole in der Umgebung der Trainingssequenz decodiert werden, und daß die so decodierten richtensymbole zur Bildung weiterer Signalabschnitte für die Ermittlung weiterer Kanalimpulsantworten herangezogen werden.

## Claims

**1.** A digital information communication method, in which at the side of the receiver the received signals are sampled and an estimation of the pulse response of the communication channel is carried out by cross correlation of a signal section with a correlation sequence, characterized in that

a) the correlation sequence is the sequence of the digital information symbol $a_i$ of the signal section in question;

b) the auto correlation function $\mathrm{akf}_r = \Sigma\, a_i^*.a_{r+i}$ of the correlation sequence is formed by including information symbols neighboring within the pulse response length, wherein $|r| = 0.1,...,m-1$ and m is the length of the pulse response in multiples of a symbol duration; and

c) the individual values of the pulse response at discrete support positions of the delay variables are each formed by the function value present for the cross correlation function at the same delay value and by a correction value containing the side values of the auto correlation function.

**2.** A method according to claim 1, characterized in that the receiving signal is sampled at a sample rate $f_a$ which is n-times the symbol rate, and that the pulse response $\underline{p}(\tau)$ is determined from the cross correlation function $\underline{g}(\tau)$ and the auto correlation function akf according to the relation

$$\underline{q}_{nl+k} = \Sigma \underline{P}_{nj+k} \mathrm{akf}_{l-j}$$

depending on the delay $\tau = (nl+k)/fa$ with $K = 0.1,...n-1$ and $l,j = 0.1,....,m-1$.

**3.** A method according to claim 1 or 2, characterized in that the pulse response is estimated according to

$$\underline{p}_{nl+k} = 1/\mathrm{akf}_0(\underline{q}_{nl+k} - \sum_{j \neq l} \underline{p}_{nj+k} \mathrm{akf}_{l-j})$$

**4.** A method according to claim 3, characterized in that the estimation of the pulse response is improved step-wise by iteration according to

$$\underline{P}_{nl+k} = 1/\mathrm{akf}_0\left(\underline{q}_{nl+k} - \sum_{j\neq l} \underline{P}'_{nj+k}\,\mathrm{akf}_{l-j}\right)$$

wherein $\underline{p}'_{nj+k}$ determines the values of the pulse response estimated in the preceding iteration step.

5. A method according to claim 2, characterized in that the pulse response is estimated according to

$$\Delta\underline{p}_{nl+k} = 1/\mathrm{akf}_0\left(\underline{q}_{nl+k} - \sum_{j\neq l} \underline{pa}_{nj+k}\,\mathrm{akf}_{l-j}\right)$$

with $\underline{pa}_{nj+k}$ being a pulse response determined in a preceding correlation step.

6. A method according to one of the preceding claims, characterized in that the pulse response is adjusted in the manner that starting out from a previously determined pulse response formed with information symbols that were not used up to then for determining the pulse response, a pulse response is estimated for this new signal section, and a new pulse response is formed by a weighted average value formation or Kalman filtering from the previously determined and newly estimated pulse response.

7. A method according to claims 5 or 6, characterized in that the new signal section only comprises one symbol length and the symbol value is obtained on the basis of the previously determined pulse response by hard decision.

8. A method according to one of the preceding claims, characterized in that the information is transferred block-wide within time slots and each time slot includes a training sequence, preferably a pseudo noise sequence, and that in the receiver in a first step a pulse response is determined by means of a the training sequence and information symbols are decoded thereby in the surroundings of the training sequence, and that the information symbols decoded in this manner are used for forming further signal sections for detecting further channel pulse responses.

**Revendications**

1. Procédé de transmission d'informations de type numérique, selon lequel, du côté du récepteur, les signaux reçus sont échantillonnés et une estimation de la réponse impulsionnelle du canal de transmission est effectuée par corrélation mutuelle d'une section de signal avec une suite de corrélation,
caractérisé en ce que :

a) la suite de corrélation est la suite des symboles d'information de type numérique $a_i$ de la section de signal considérée,
b) la fonction d'autocorrélation $\mathrm{akf}_r = \Sigma\, a_i^*.a_{r+i}$ de la suite de corrélation est formée en incluant des symboles d'information qui sont voisins dans les limites de la longueur de réponse impulsionnelle, avec $|r| = 0, 1, \ldots , m - 1$ et m comme longueur de la réponse impulsionnelle en multiples d'une durée de symbole et
c) les valeurs élémentaires de la réponse impulsionnelle en des positions d'appui discontinues des variables de retard sont chaque fois formées au moyen de la valeur de fonction se présentant pour la fonction de corrélation mutuelle, pour la même valeur de retard, et d'une valeur de correction contenant les valeurs secondaires de la fonction d'autocorrélation.

2. Procédé selon la revendication 1, caractérisé en ce que le signal de réception est échantillonné à une cadence d'échantillonnage $f_a$ qui est égale à n fois la cadence des symboles et en ce que la réponse impulsionnelle $\underline{P}(T)$ est déterminée à partir de la fonction de corrélation mutuelle $\underline{q}(\tau)$ et de la fonction d'autocorrélation akf conformément à la relation :

$$\underline{q}_{nl+k} = \Sigma\underline{P}_{nj+k}\mathrm{akf}_{l-j}$$

7

en fonction du retard $\tau = (nl+k)/fa$ avec $k = 0,1, ..., n - 1$ et $l,j = 0,1, ... , m - 1$.

3. Procédé selon la revendication 1 ou 2, caractérisé en ce que la réponse impulsionnelle est estimée conformément à

$$\underline{p}_{nl+k} = 1/\mathrm{akf}_0\left(\underline{q}_{nl+k} - \sum_{j \neq l} \underline{p}_{nj+k}\,\mathrm{akf}_{l-j}\right)$$

4. Procédé selon la revendication 3, caractérisé en ce que l'estimation de la réponse impulsionnelle est améliorée pas à pas et par itération conformément à :

$$\underline{p}_{nl+k} = 1/\mathrm{akf}_0\left(\underline{q}_{nl+k} - \sum_{j \neq l} \underline{p}'_{nj+k}\,\mathrm{akf}_{l-j}\right)$$

$\underline{p}'_{nj+k}$ désignant chaque fois les valeurs de la réponse impulsionnelle qui sont estimées au pas précédent d'itération.

5. Procédé selon la revendication 2, caractérisé en ce que la réponse impulsionnelle est estimée conformément à :

$$\Delta\underline{p}_{nl+k} = 1/\mathrm{akf}_0\left(\underline{q}_{nl+k} - \sum_{j \neq l} \underline{pa}_{nj+k}\,\mathrm{akf}_{l-j}\right)$$

avec $\underline{pa}_{nj+k}$ comme réponse impulsionnelle déterminée au pas précédent de corrélation.

6. Procédé selon l'une des revendication précédentes, caractérisé en ce que la réponse impulsionnelle est restituée de manière telle qu'une réponse impulsionnelle est estimée pour cette nouvelle section de signal, en étant formée à partir d'une réponse impulsionnelle précédemment déterminée et avec des symboles d'information qui n'ont pas jusqu'alors servi pour la détermination de la réponse impulsionnelle, et une nouvelle réponse impulsionnelle est formée par formation d'une valeur moyenne pondérée ou par filtration Kalman à partir de la réponse impulsionnelle précédemment déterminée et de la réponse impulsionnelle nouvellement estimée.

7. Procédé selon la revendication 5 ou la revendication 6, caractérisé en ce que la nouvelle section de signal ne couvre qu'une seule longueur de symbole et en ce que la valeur de symbole est obtenue, en détermination sans équivoque, sur la base de la réponse impulsionnelle précédemment déterminée.

8. Procédé selon l'une des revendication précédentes, caractérisé en ce que les informations sont transmises bloc par bloc dans des fenêtres de temps et chaque fenêtre de temps contient une séquence d'entraînement, de préférence une suite de bruits pseudo-aléatoires, en ce que, dans le récepteur, dans un premier pas, une réponse impulsionnelle est déterminée au moyen de la séquence d'entraînement et, à partir de là, des symboles d'information sont décodés dans le voisinage de la séquence d'entraînement et en ce que les symboles d'information ainsi décodés servent à la formation d'autres sections de signal pour la détermination d'autres réponses impulsionnelles de canal.

$$\underline{y}_k \longrightarrow \boxed{\begin{array}{c} \text{Symbol} \\ \text{Schätzung} \end{array}} \longrightarrow \underline{a}_i$$

$$\underline{pa}_k$$

$$\boxed{\begin{array}{c} \text{Speicher} \\ \underline{p}_k \end{array}}$$

$$\underline{p}_k \qquad \underline{pa}_k$$

$$\boxed{\begin{array}{c} \text{Berechnung} \\ \triangle\underline{p}_k \\ \text{Nachführung} \\ \underline{p}_k \end{array}}$$

$$\underline{q}_k$$

$$\boxed{\begin{array}{c} \text{Berechnung} \\ \underline{q}_k \end{array}}$$

$$\text{akf}_j$$

$$\boxed{\begin{array}{c} \text{Berechnung} \\ \text{akf}_j \end{array}}$$